Europäisches Patentamt

European Patent Office

Office européen des brevets

(11) Veröffentlichungsnummer: **0 327 657**

**A1**

## EUROPÄISCHE PATENTANMELDUNG

(21) Anmeldenummer: **88102003.6**

(22) Anmeldetag: **11.02.88**

(51) Int. Cl.⁴: **B23H 9/10**

(43) Veröffentlichungstag der Anmeldung:
**16.08.89** Patentblatt **89/33**

(84) Benannte Vertragsstaaten:
**BE DE FR GB IT NL SE**

(71) Anmelder: **Leistritz Aktiengesellschaft**
**Markgrafenstrasse 29-39**
**D-8500 Nürnberg(DE)**

(72) Erfinder: **Ibler, Georg**
**Rennbahnstrasse 72**
**D-8500 Nürnberg 60(DE)**

(74) Vertreter: **Czowalla . Matschkur Patentanwälte**
**Dr.-Kurt-Schumacher-Strasse 23 Postfach**
**9109**
**D-8500 Nürnberg 11(DE)**

(54) Verfahren zum Herstellen eines Schaufelrades.

(57) Die Erfindung richtet sich auf ein Verfahren zum Herstellen eines Schaufelrades mit am Außenumfang einer Radscheibe angeordneten Schaufelblättern in Blisk-Ausführung, wobei in dem scheibenförmigen Rohling die zwischen den Schaufelblättern befindlichen Lücken grob vorbearbeitet und anschließend die Schaufelblätter mittels in die Lücken eingreifender Formkathoden durch elektrochemisches Senken (ECM) bis zur Fertigkontur der Schaufelblätter bearbeitet werden.

FIG. 1

EP 0 327 657 A1

## Verfahren zum Herstellen eines Schaufelrades

Die Erfindung richtet sich auf ein Verfahren zum Herstellen eines Schaufelrades mit am Außenumfang einer Radscheibe angeordneten Schaufelblättern in Blisk-Ausführung.

Die an ihrem Umfang mit Schaufelblättern besetzten Laufräder, wie sie insbes. für moderne Hochleistungstriebwerke in Betracht kommen, sind in der Regel mit einzelnen Schaufeln besetzt, die meist über die Länge unterschiedliche Profilquerschnitte mit einer Verwindung aufweisen. Die einzelnen Schaufeln sind in axiale oder am Umfang der Laufscheiben angeordnete Nuten eingesetzt. Laufscheibe und Schaufel werden getrennt voneinander gefertigt und anschließend zusammengefügt. Dieses Verfahren ist außerordentlich aufwendig. Man ist infolgedessen zu einer sogenannten "Blisk-Ausführung" übergegangen. Hierunter versteht man Laufräder, die in einem Stück aus einem scheibenförmigen Vollmaterial gefertigt sind. Das Verfahren hat sich allerdings bisher wegen wirtschaftlicher und technischer Mängel nicht durchsetzen können. Solche Blisk-Ausführungen können bisher bei größeren Abmessungen unter Verwendung mehrachsiger Fräsmaschinen hergestellt werden. Der Fertigungsaufwand für die aus dem Vollen zu arbeitenden Schaufelblätter ist allerdings außerordentlich groß, da infolge der dreidimensionalen Flächenausbildung sowohl die Konkav- als auch die Konvexseite der Schaufelblätter nur zeilenförmig in Längs-, Quer- oder Umfangsrichtung gearbeitet werden können. Wegen des bei den zur Verwendung kommenden Fräswerkzeugen notwendigen Zeilensprungs ergibt sich hierbei eine schuppenartige Oberfläche, die unter schwierigen Bedingungen und großem Zeitaufwand von Hand nachgearbeitet werden muß. Für die industrielle Fertigung ist ein solches Verfahren wirtschaftlich fragwürdig. Gleichwohl leitet sich hieraus aber die Notwendigkeit ab, ein Herstellungsverfahren zu finden, das eine größtmögliche Wirtschaftlichkeit gewährleistet und damit billiger ist als die bisherigen Fertigungsverfahren, aber zugleich zu höher belastbaren Schaufelrädern und verbesserten Eigenschaften, insbes. optimierten Oberflächen führt.

Diesem Problem nimmt sich die Erfindung im Rahmen des eingangs bezeichneten Verfahrens an, und sie löst die gestellte Aufgabe durch die Maßnahmen, in dem scheibenförmigen Rohling die zwischen den Schaufelblättern befindlichen Lücken grob vorzubearbeiten und anschließend die Schaufelblätter mittels in die Lücken eingreifender Formkathoden durch elektrochemisches Senken (ECM) bis zur Fertigkontur der Schaufelblätter zu bearbeiten. Hiernach wird zunächst eine grobe Vorbearbeitung mit einem entsprechend hohem Aufmaß des zu erzielenden Werkstücks durchgeführt. Damit werden die Voraussetzungen für die Anwendung einer elektrochemischen Verfahrensweise bei der anschließenden Herstellung der Schaufelblätter geschaffen, bei welcher diese ihre Fertigkontur erhalten. Ein solches Fertigungsverfahren ist von größter Wirtschaftlichkeit. Es führt zu einem Erzeugnis von einwandfreier Oberflächenbeschaffenheit, größter Maßhaltigkeit unter Einhaltung der geforderten außerordentlich engen Toleranzen und zu einer absoluten Wiederholgenauigkeit, was die Grundvoraussetzungen für derartige Präzisionswerkstücke sind.

Das erfindungsgemäße Verfahren kann bezüglich der Grobbearbeitung der Lücken für die Schaufelblätter in verschiedener Weise variiert werden. Zum einen ist es möglich, auch die Vorbearbeitung auf elektrochemischem Wege durchzuführen. Eine andere Alternative sieht hingegen die Anwendung der an sich bekannten spanabhebenden Arbeitsweise mittels mehrachsiger Fräsmaschinen vor. Welcher Arbeitsweise der Vorzug gegeben wird, richtet sich ganz nach den Umständen des Einzelfalls. Es erweist sich aber hierdurch die hohe Anpassungsfähigkeit des erfindungsgemäßen Verfahrens an die jeweils vorgegebenen Möglichkeiten des Fertigungsbetriebs. Zweckmäßig werden mit einer Kathode, deren Form der Bauch- wie der Rückenseite und schließlich auch der Fußplatte des Schaufelblattes angepaßt ist, die Lücken im Seitenspaltverfahren in radialer Richtung in den Rohling gesenkt. Dabei wird die Kathode dem Twist der Schaufeln entsprechend in radialer Richtung drehbar eingeführt. Die Kathode ist so ausgebildet, daß nach erfolgtem Senkvorgang das Schaufelblatt und die Fußplatte ein angemessenes Aufmaß, beispielsweise etwa 3 - 4 mm, aufweisen. Ist eine Lücke fertiggestellt, wird das Werkzeug ausgefahren und das Werkstück mittels der maschinengebundenen Teileinrichtung um einen Takt weitergedreht, so daß die nächste Lücke bearbeitet werden kann.

Es hat sich als vorteilhaft erwiesen, die Anordnung so zu treffen daß zur Erzeugung der Fertigkontur der Schaufelblätter die Formkathoden von zwei benachbarten Lücken aus ein Schaufelblatt gleichzeitig an beiden Seiten bearbeiten. Mit jedem Bearbeitungsvorgang wird hierbei ein Schaufelblatt in der gewünschten Form fertiggestellt. Hierbei arbeiten die Formkathoden in einer Richtung gegeneinander, und sie schließen zwischen sich das zu bearbeitende Schaufelblatt ein. Eine andere Alternative sieht hingegen vor, daß die Formkathoden von einer Lücke aus die einander zugekehrten Seiten von zwei benachbarten Schaufelblättern bearbeiten. Das heißt m.a.W., die Formkathoden arbeiten in zueinander entgegengesetzter Richtung, und es werden hierbei gleichzeitig zwei benachbarte Schaufelblätter bearbeitet, jedes allerdings nur an einer ihrer beiden Seiten.

Als weitere Alternative ist vorgesehen, die Formkathode dem Twist des Schaufelblattes folgend drehbar in die Lücke zwischen zwei Schaufelblättern einzuführen.

Dabei wird die maschinenseitige Teileinrichtung oder auch die Formkathode in eine hin- und herpendelnde Bewegung mit sich ständig vergrößerndem Hub in Umfangsrichtung des Blisk versetzt. Dabei werden durch die Formkathode abwechselnd zwei benachbarte Schaufelblätter jeweils auf einer Seite bearbeitet. Durch eine gleichzeitig stattfindende Vorschubbewegung in Richtung zur Mittelachse des Blisk können Ringraumkontur und Wurzelradien mitbearbeitet werden.

Es hat sich im Rahmen des erfindungsgemäßen Verfahrens als besonders vorteilhaft erwiesen, die innere Ringraumbegrenzung durch eine Relativbewegung der Anode, z.B. bis 90°, zu den Formkathoden zu bearbeiten, um dadurch zugleich den Fuß einschl. der Wurzelradien der Schaufeln im Bereich der inneren Radscheibe des Schau-felrades in der gewünschten hohen Genauigkeit zu fertigen, so daß eine zusätzliche Nachbearbeitung oder ein hierzu erforderlicher eigener Arbeitsgang nach Möglichkeit entfallen. Besonders zweckmäßig ist es hierbei, daß der innere Ringraum durch das Einbringen der Lücken bereits vorbearbeitet ist.

Von ausschlaggebender Bedeutung ist im Rahmen der Erfindung schließlich das Merkmal, daß die Werkzeugaufnahme für die Formkathoden während des Bearbeitungsvorgangs entsprechend dem Twist der Schaufelblätter verdreht wird. Dies ist erforderlich für das Vorsenken und das Einführen der Werkzeuge beim Fertigsenken. Hierdurch wird dem Umstand Rechnung getragen, daß sich die Form und der Querschnitt der Schaufeln vom äußeren freien Ende bis zum Fuß hin ständig ändern.

Weitere Merkmale und Einzelheiten der Erfindung ergeben sich aus der folgenden rein schematischen Darstellung einer das erfindungsgemäße Verfahren für das Vorsenken durchführenden Vorrichtung und einiger Arbeitsweisen. Hierbei zeigen:

Fig. 1 die Vorrichtung, teilweise im Schnitt;

Fig. 2 den Vorgang des Vorsenkens;

Fig. 3 die Fertigbearbeitung eines Schaufelblattes;

Fig. 4 eine abgewandelte Ausführungsform der Fertigbearbeitung,

Fig. 5 eine weitere Abwandlung der Fertigbearbeitung und

Fig. 6 den Vorgang der Fertigbearbeitung bei axialem Ansatz der Kathoden.

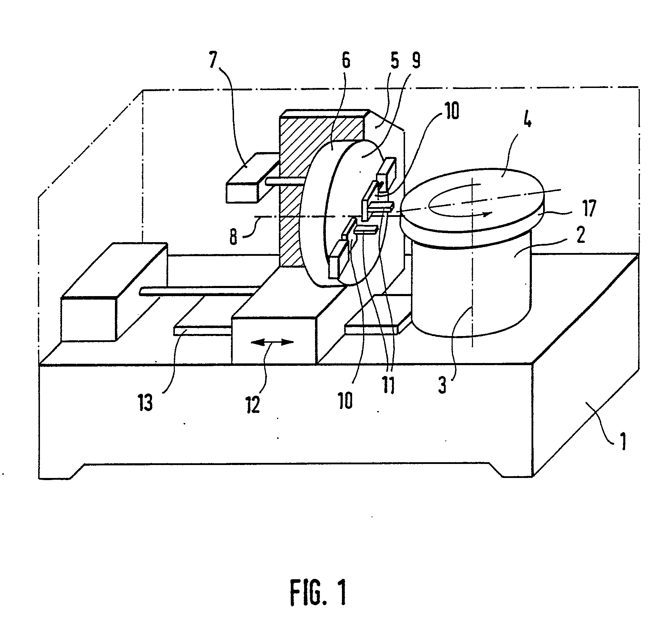

Die in Fig. 1 grob schematisch wiedergegebene Vorrichtung ist eine rechnergesteuerte Mehrachsenmaschine, beispielsweise eine Fünf-Achsen-Maschine. Auf der Basis 1 ist der Werkstückträger 2 um die Drehachse 3 drehbar gelagert. Er dient zur Aufnahme des Werkstücks 4, hier in Form einer Scheibe, aus der das Schaufelrad gearbeitet wird. Der Ständer 5 lagert den Werkzeugtisch 6, dessen Antrieb mit 7 bezeichnet ist. Dieser Tisch 6 ist um die Achse 8 drehbar. Er trägt an seiner Stirnseite 9 die beiden Werkzeugaufnahmeschlitten 10, deren jede bei der dargestellten Ausführungsform eine Kathode 11 als Werkzeug trägt. Der Ständer 5 selbst ist als Schlitten ausgebildet und in Pfeilrichtung 12 auf der Bahn 13 auf der Oberseite der Basis 1 verschiebbar.

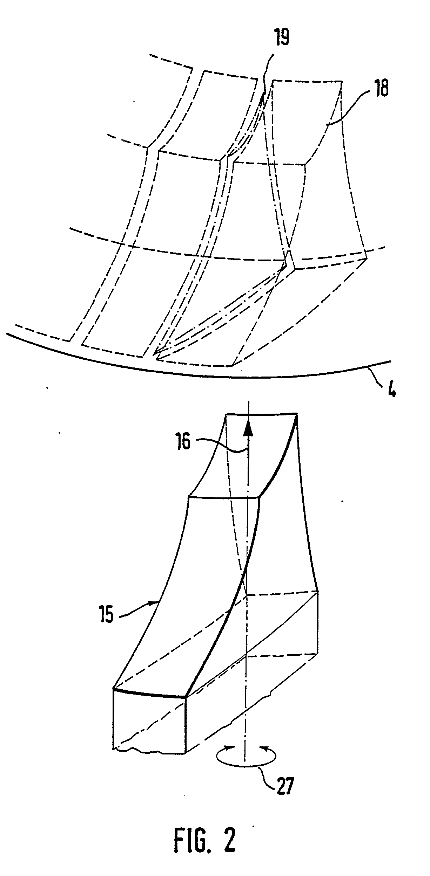

Je nach der Gestalt des Schaufelrades, insbes. dessen Schaufelblätter und dessen innerer Ringraum, sind die als Werkzeug dienenden Kathoden ausgebildet. Die Fig. 2 zeigt eine solche Kathode 15, die zum Vorsenken dient und bereits die Form des Blisk weitgehend vorgibt. Bei der dargestellten Ausführungsform wird die Kathode 15 in der Pfeilrichtung 16 etwa radial vom Außenumfang 17 des scheibenförmigen Werkstücks 4 mit einer dem Twist der Schaufelblätter 19 entsprechenden Drehbewegung 27 in dieses eingefahren, bis sich die in Fig. 2 gestrichelt dargestellte Lücke 18 als Zwischenraum zwischen zwei Schaufelblättern 19 bildet. Im folgenden Arbeitsgang erfolgt dann die eigentliche Bearbeitung der Schaufelblätter 19, die mit ihrem Fuß 20 in den Innenring 21 des Schaufelrades übergehen. Das hierzu erforderliche Werkzeug besteht bei dieser Ausführungsform aus einem Paar von Kathoden 22, die mit ihrem Fuß 23 in die Werkzeugaufnahme 10 des Werkstückhalters eingespannt sind. Jede einzelne Kathode 22 wird in eine von zwei aufeinander folgenden vorgearbeiteten Lücken 18 radial in Pfeilrichtung 24 eingefahren und in Richtung des Doppelpfeils 25 gegeneinander bewegt, so daß sie ein Schaufelblatt 19 zwischen sich einschließen und fertigbearbeiten. Selbstverständlich können hierbei die Kathoden 22 um ihre jeweilige Längsachse 26 in Pfeilrichtung 27, dem erforderlichen Twist der Schaufelblätter 19 folgend, verstellt werden.

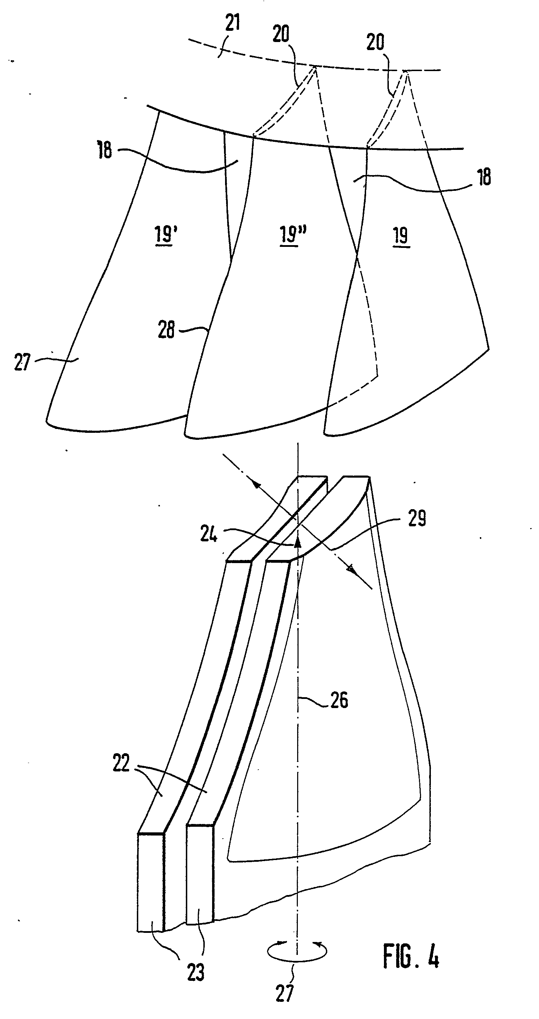

Die Ausführungsform nach Fig. 4 entspricht im Grundaufbau der zuvor erläuterten, jedoch werden hier die beiden Kathoden 22 in ein und dieselbe vorgearbeitete Lücke 18 zwischen zwei Schaufelblättern 19 in Pfeilrichtung 24 eingefahren. Alsdann werden die beiden Kathoden 22 in Richtung des Doppelpfeils 29 auseinander gefahren, und sie dienen dann zur gleichzeitigen Bearbeitung der einander zugekehrten Seiten, nämlich der konvex gekrümmten Außenfläche 27 der Schaufel 19' und der konkav gekrümmten Innenseite 28 der Schaufel 19".

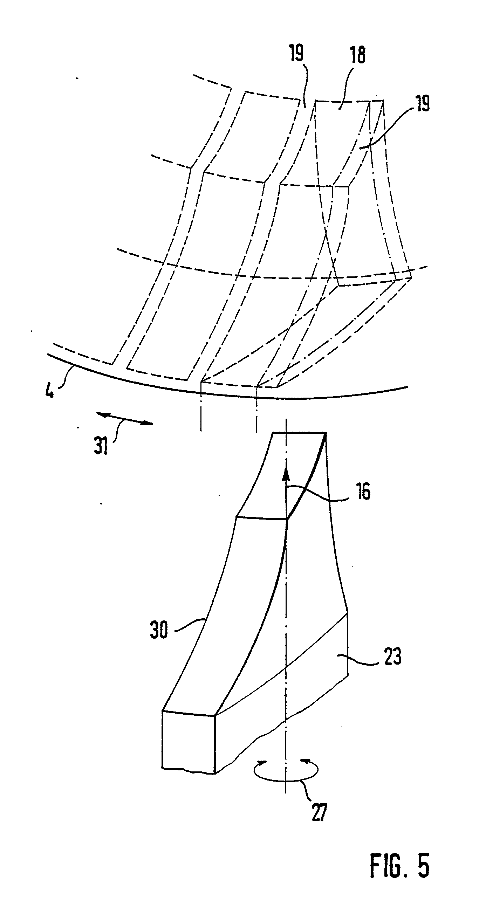

Eine weitere Alternative läßt die Fig. 5 erkennen, nämlich eine Kathode 30 zum Fertigsenken. Diese Kathode 30 wird in radialer Richtung (s. Pfeil 16) in eine vorgearbeitete Lücke 18 eingefahren und um die Mittelachse des Blisk in die durch den Doppelpfeil 31 angedeutete relative Pendelbewegung versetzt, so daß sie wechselseitig die einander zugekehrten Flächen zweier benachbarter vorbearbeiteter Schaufelblätter 19 fertigbearbeitet.

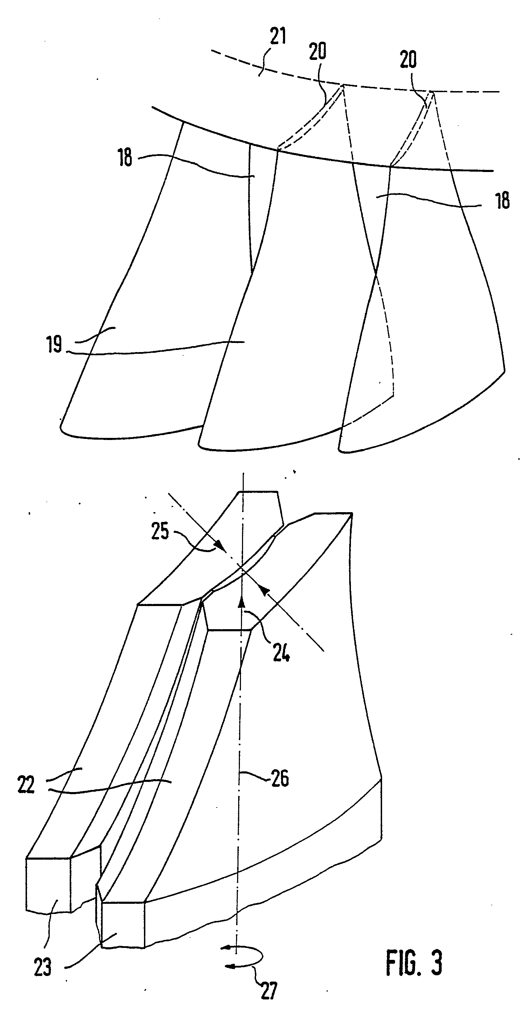

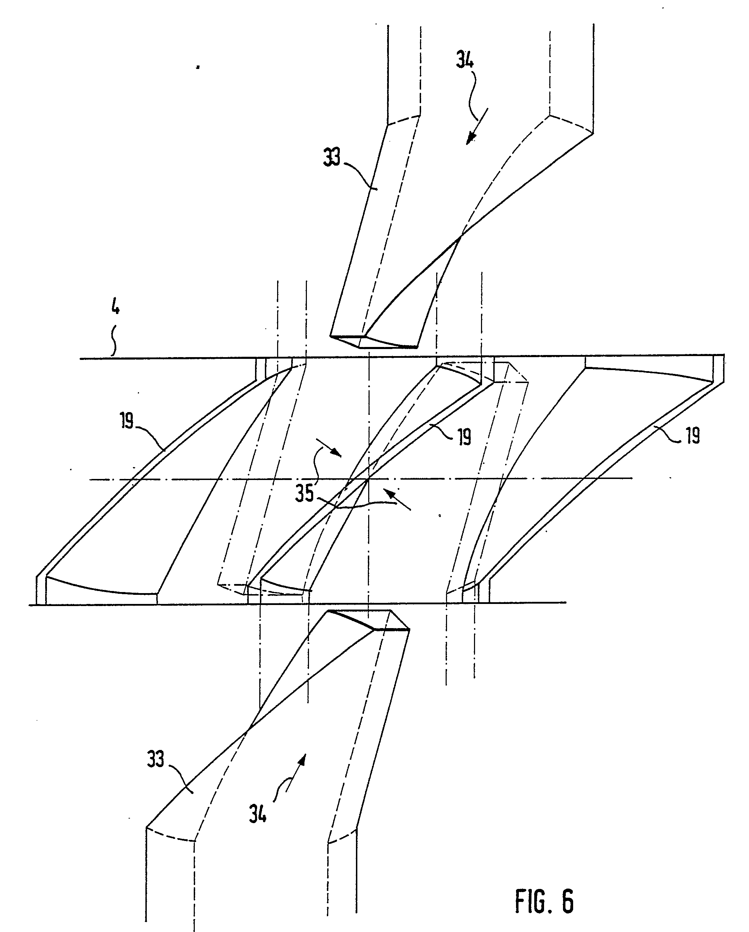

Schließlich geht aus Fig. 6 eine Arbeitsweise hervor, bei der zwei Kathoden 33 in axialer Richtung zum Werkstück 4 in gegeneinander gerichteter Pfeilrichtung 34 eingefahren werden. Auch diese Elektroden 33 können, was, da an sich verständlich, im einzelnen nicht wiedergegeben ist, um ihre Längsachse verdrehbar gestaltet werden, um sich dem Twist der Schaufelblätter 19 anpassen zu können. Entsprechend der in Fig. 3 beschriebenen Ausführungsform werden auch hier die beiden Kathoden 33 in Pfeilrichtung 35 gegeneinander bewegt. Sie schließen dann ein Schaufelblatt 19 zwischen sich ein und führen bei gleichzeitiger radialer Vorschubbewegung dessen Fertigbearbeitung inclusive Ringraumkontur und Wurzelradien aus.

## Ansprüche

1. Verfahren zum Herstellen eines Schaufelrades mit am Außenumfang einer Radscheibe angeordneten Schaufelblättern in Blisk-Ausführung, dadurch gekennzeichnet, daß in dem scheibenförmigen Rohling (4) die zwischen den Schaufelblättern (19) befindlichen Lücken grob vorbearbeitet und anschließend die Schaufelblätter (19) mittels in die Lücken eingreifender Formkathoden (22) durch elektrochemisches Senken (ECM) bis zur Fertigkontur der Schaufelblätter (19) bearbeitet werden.

2. Verfahren nach Anspruch 1, dadurch gekennzeichnet, daß die Vorform durch Gießen, Schmieden oder nach pulvermetallurgischen Verfahren hergestellt wird.

3. Verfahren nach Anspruch 1, dadurch gekennzeichnet, daß die Vorbearbeitung in an sich bekannter Weise spanend erfolgt.

4. Verfahren nach Anspruch 1, dadurch gekennzeichnet, daß die Vorbearbeitung auf elektrochemischem Wege erfolgt.

5. Verfahren nach mindestens einem der Ansprüche 1 bis 4, dadurch gekennzeichnet, daß die innere Ringraum bei der Vorbearbeitung vorprofiliert wird.

6. Verfahren nach mindestens einem der Ansprüche 1 bis 5, dadurch gekennzeichnet, daß beim Vorbearbeiten durch EC-Senken die Werkzeugaufnahme (10) für die Formkathoden (15) während des Bearbeitungsvorgangs entsprechend dem Twist der Schaufelblätter (19) verdreht wird.

7. Verfahren nach mindestens einem der Ansprüche 1 bis 4, dadurch gekennzeichnet, daß die Formkathoden (22) von zwei benachbarten Lücken aus ein Schaufelblatt (19) gleichzeitig an beiden Seiten bearbeiten.

8. Verfahren nach mindestens einem der Ansprüche 1 bis 4, dadurch gekennzeichnet, daß die Formkathoden (22) von einer Lücke aus die einander zugekehrten Seiten von zwei benachbarten Schaufelblättern (19) bearbeiten.

9. Verfahren nach mindestens einem der Ansprüche 1 bis 4, dadurch gekennzeichnet, daß die Formkathoden (22) in axialer Richtung geteilt sind, in Richtung der Eintritts- und Austrittsseite einfahren und in Richtung der Konkav- und Konvexseite des eingeschlossenen Schaufelblattes (19) arbeiten.

10. Verfahren nach mindestens einem der Ansprüche 1 bis 9, dadurch gekennzeichnet, daß zwei benachbarte Schaufelblätter (19) einschließlich der inneren Ringraumbegrenzung und der Wurzelradien abwechselnd auf jeweils einer Seite bearbeitet werden.

11. Verfahren nach Anspruch 10, dadurch gekennzeichnet, daß die Werkzeugträger in Umfangsrichtung um die Mittelachse des Blisks eine Pendelbewegung mit sich vergrößerndem Hub bei gleichzeitiger Vorschubbewegung in Richtung zum Ringraum und unter Drehbewegung der Formkathode ausführen.

12. Verfahren nach mindestens einem der Ansprüche 1 bis 11, dadurch gekennzeichnet, daß die innere Ringraumbegrenzung einschließlich der Wurzelradien der Schaufeln (19) durch eine Relativbewegung der Anode zu den Formkathoden (22) bearbeitet wird.

13. Verfahren nach mindestens einem der Ansprüche 1 bis 12, dadurch gekennzeichnet, daß bei der Fertigbearbeitung die Werkzeuge vor dem Senkvorgang dem Twist der Schaufeln folgend eingefahren werden.

FIG. 1

FIG. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 228 772 (EX-CELL-O CO.) <br> * Seite 3, Zeile 10 - Seite 4, Zeile 2; Seite 8, Zeile 16 - Seite 10, Zeile 5; Seite 17, Zeile 21 - Seite 18, Zeile 8 * | 1-3 | B 23 H 9/10 |
| A | --- | 6,7,13 | |
| A | PATENT ABSTRACTS OF JAPAN, Band 3, Nr. 55 (C-45), 11. Mai 1979, Seite 159 C45; & JP-A-54 32 144 (TOKYO SHIBAURA) 09-03-1979 <br> * Insgesamt * <br> --- | 1,8 | |
| A | DE-A-2 165 147 (HITACHI) <br> * Ansprüche 1,2 * <br> ----- | 1 | RECHERCHIERTE SACHGEBIETE (Int. Cl.4) <br><br> B 23 H |

Der vorliegende Recherchenbericht wurde für alle Patentansprüche erstellt

| Recherchenort | Abschlußdatum der Recherche | Prüfer |
|---|---|---|
| DEN HAAG | 28-09-1988 | DAILLOUX C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)